Europäisches Patentamt

European Patent Office

Office européen des brevets

(11) Publication number: 0 628 809 A1

# EUROPEAN PATENT APPLICATION

(21) Application number: 93109123.5

(22) Date of filing: 07.06.93

(51) Int. Cl.5: G01N 27/00, G01B 7/34

(43) Date of publication of application:
14.12.94 Bulletin 94/50

(84) Designated Contracting States:
DE FR GB

(71) Applicant: International Business Machines
Corporation
Old Orchard Road
Armonk, N.Y. 10504 (US)

(72) Inventor: Bartha, Johann W., Dr. Dipl.-Phys.
Dachteler Bergstrasse 33/1
D-7042 Aidlingen-Dachtel (DE)
Inventor: Greschner, Johann, Dr. Dipl.-Phys.
Tiergartenweg 14
D-7041 Pliezhausen 1 (DE)

Inventor: Bayer, Thomas
Hinterweiler Strasse 45
D-7032 Sindelfingen (DE)
Inventor: Nonnenmacher, Martin, Dr.
Dipl.-Phys.

verstorben (DE)
Inventor: Weiss, Helga
Weilandstrasse 7
D-7030 Böblingen (DE)

(74) Representative: Schäfer, Wolfgang, Dipl.-Ing.
IBM Deutschland Informationssysteme
GmbH
Patentwesen und Urheberrecht
D-70548 Stuttgart (DE)

(54) Calibration standard for 2-D and 3-D profilometry in the sub-nanometer range and method of producing it.

(57) A calibration standard comprises a supporting structure (1) of single crystal material with at least one pair of different kinds of structures consisting of a raised line (2) and a trench (3). These structures have the identical width in the range of about 500 nm. The single crystal material preferably is silicon with (110)-orientation. A method of producing the calibration standard comprises the steps: providing two polished wafers of the same single crystal material and with the same crystal orientation, forming an oxide layer on the polished surface of the first wafer, bonding the second wafer to the first oxidized wafer with the polished surfaces of the wafers facing each other, cutting the bonded structure rectangular to the polished surfaces, selectively etching both the wafers to a defined depth, masking the portions of the oxide layer now representing the raised line (2) and selectively etching the oxide layer in the unmasked areas to a defined depth to form the trench (3).

The calibration standard may be used for the profilometry in the sub-nanometer range.

FIG. 3

EP 0 628 809 A1

The present invention relates to a calibration standard for the profilometry in the sub-nanometre range, especially for the AFM/STM profilometry and to a method of producing said calibration standard.

Nanometrology stands for the measurement technology necessary to investigate, to develop and to verify the measuring features of instruments and of material standards with an uncertainty best given in units of nanometers. For the calibration of different probe systems and different measuring instruments reference standards are asked for.

2-D AFM profilometry uses specially shaped ultrafine silicon tips with a diameter of typically about 250 nm. The absolute measuring preciseness solely depends on the exact knowledge of the tip diameter which usually is determined by a high resolution SEM with a measuring accuracy of 3 to 5%.

With a tip diameter of 250 nm this leads to a measuring preciseness worse than about 7.5 nm. Within the electron microscope, depending on the rest gas concentration, the tip is more or less contaminated and thus its diameter is changed undefinitely during measuring. To improve the measuring accuracy the tip should be calibrated directly before and after the measurement with a gauge.

Other common solutions also focus on the application of single-crystal silicon technology.

A standard reference material (SRM) consisting of a silicon wafer with a silicon dioxide film of uniform thickness is described in SPIE Vol.661, "Film thickness and refractive index Standard Reference Material calibrated by ellipsometry and profilometry" by G.A.Candela et.al.. The silicon dioxide film contains windows used for stylus profilometry measurements with a mechanical depth very nearly the same as the oxide thickness. The depth is not exactly the same as the oxide thickness due to native oxide forming in the window with an average thickness of about 2nm. This affects the accuracy of the measurement.

In Metrologia, 1991/92, Vol.28, pp.443-453, "Nanometrology at the PTB" by H.Kunzmann, a reference scale in the sub-nanometre range is derived from a silicon single crystal epitaxially grown by chemical gas transfer. With high probability the surface of this crystal is plane within one lattice plane and it is proposed to use the steps which are small-integer multiples of lattice plane distances for the calibration of probe systems for nanometrology. These steps are results of the epitaxial processes and they could be used to manufacture step-height gauges, but only if the technology of epitaxial growth could be brought under well-defined metrological control. Although realizing accuracies in the sub-nanometre range, this solution only covers 1-D displacement metrology.

It is therefore an object of the invention to provide a calibration standard for 2-D and 3-D profilometry with an accuracy in the range of 1 nm and better.

This object is achieved with the calibration standard of claim 1. The invention also comprises methods of producing such a calibration standard and the use of the standard for measuring features in the sub-nanometre range.

Ways of carrying out the invention are descibed in detail below with reference to drawings showing only specific embodiments in which:

Fig.1    is showing the calibration standard with one pair of different kinds of structures

Fig.2a    shows an array of pairs and

Fig.2b    an array of dies on a wafer

Fig.3    is also showing the calibration standard with one pair of different kinds of structures and the measured profile lines

Fig.4    gives an overview of the process steps of a preferred method of producing the calibration standard

Fig.5    shows a preferred method of measuring features like ultrafine silicon tips with the calibration standard

Fig.6    gives some results of measurements made with an ultrafine tip and the calibration standard

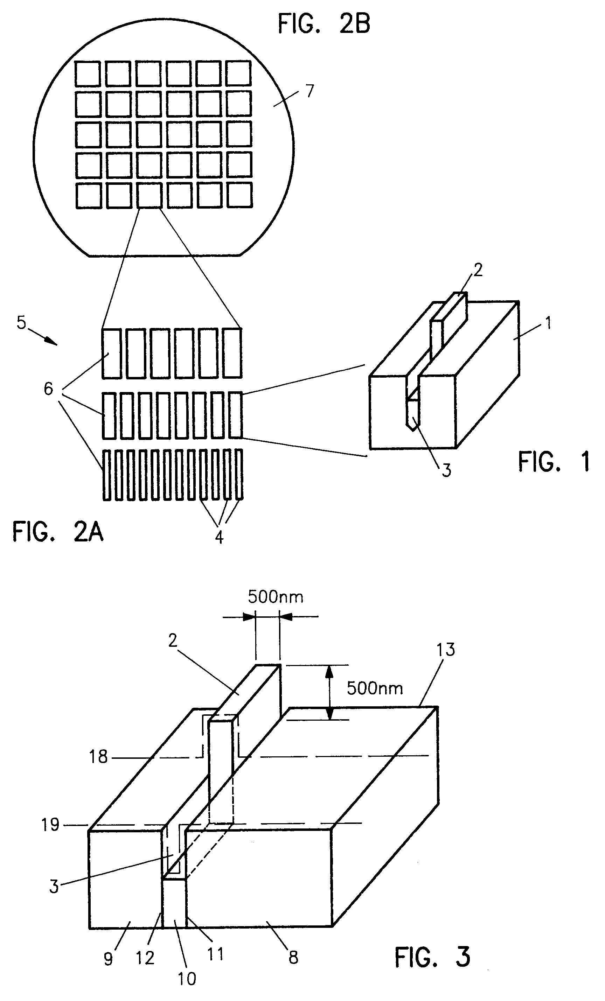

In Fig.1 the basic structure of the calibration standard consisting of a supporting structure 1 and one pair of different kinds of structures 2,3 is to be seen.

The first kind of structure is a raised line 2 and the second kind of structure is a trench 3. Both of the structures, the raised line and the trench, are of exactly the same width.

Since this basic structure is used as a calibration standard, the width of these structures 2,3 should be comparable to the lateral and vertical dimensions of the features to be measured. This has the advantage that the calibration as well as the measuring step may be carried out within the same operating area.

Nowadays the smallest lateral dimensions to be measured are the smallest linewidths of the semiconductor chips , typically in the range of 500 nm (16 Mbit-chip) or of 350 nm (64 Mbit-chip). Typical vertical dimensions are smaller than approximately 2000 nm.

The width of the trench and the raised line as well as their vertical dimension therefore preferably lie in the range of approximately 500 nm.

In a preferred embodiment groups 6 of basic structures with all the basic structures or pairs 4 of different kinds of structures 2,3 of a group 6 having the same width are provided as shown in Fig.2a. Groups of basic structures form an array and several arrays of calibration structures may be arranged on a substrate 7, preferably of silicon material.

In the embodiment shown in Fig.2b basic structures with different line widths are arranged on a relatively small area of a few square millimeters on a silicon wafer, typically in a die of about 1 cm$^2$. For calibrating different tips or for calibrating piezoelectric actuators this is very important since it is required to have a calibration standard with structures 2,3 showing different line widths.

One method to produce a calibration standard as described above starts with providing two polished wafers 8,9 as shown in Fig.3. These wafers have the same single crystal material with the micro roughness of the polished surfaces 11,12 being better than 1 nm. The preferred material is silicon. Both wafers 8,9 have the same crystal orientation. For the method described hereinafter their surface 11,12 is a (110)-surface. On the polished surface 11 of the first wafer 8 an oxide 10 is grown by thermally oxidizing the wafer 8 until an oxide thickness corresponding to the width of the raised line 2 and the trench 3, which are to be formed later, is reached. The thickness of the oxide layer 10 thus lies in the range of approximately 500 nm. In a next step the second wafer 9 is bonded to the oxide layer 10 grown on the first wafer 8. This is done in a way that the polished surfaces 11,12 of both the wafers 8,9 are facing each other.

In the following steps, especially when the structures 2,3 of the calibration standard will be formed, this detail becomes important since the polished surfaces 11,12 will form the walls of the trench 3. The bonding step typically is fusion bonding or anodic bonding of the two wafers 8,9 and produces a chemical interconnection between the two wafers at the interface 12.

The bonded sandwich structure thus achieved is then cut rectangular to the polished surfaces 11,12 of the bonded wafers 8,9 by a sawing step and the surface of cut 13 is polished and cleaned in a known manner.

Breaking of the sandwich structure is not appropriate since this often causes unwanted micro cracks at the interface 12.

In this preferred embodiment the surface of cut 13 is a (111)-surface due to the use of wafers 8,9 with (110)-surfaces.

This breaking step clearly shows the advantage of this method. By embedding the silicon dioxide layer 10 between the polished surfaces 11,12 of the wafers damage of the silicon dioxide layer 10 is avoided during polishing. By depositing a thin film onto the oxide layer 10 instead of bonding a wafer 9 damage of the oxide film 10 would occur when the surface of cut 13 is polished.

As a next step the wafer material embedding the oxide layer 10 is selectivily etched back to a defined depth of about 500 nm. To avoid sidewall contamination of the raised line 2 to be formed and to achieve a high selectivity of at best 1000:1 between the wafer material, preferably silicon, and the oxide layer 10, silicon dioxide, anisotropical wet etching is chosen instead of plasma etching. Isotropical wet etch solutions normally show poorer selectivity of about a factor 10.

With a caesium hydroxide anisotropical wet etch solution a selectivity of about 800:1 may be expected. Although when etching with the desired selectivity of 1000:1 the upper edges of the raised line 2 will be shrunk of approximately 0.5 nm. This effect however is reproducible and does not affect the use of the calibration standard for measuring features.

Now the calibration standard shows a raised silicon dioxide line 2 over its entire length.

Next, portions of the raised line 2 are masked with an etch protecting layer of , for example, silicon nitride. In the unmasked areas the oxide layer 10 is etched to a defined depth of about 500 nm in a wet etch solution. A suitable etch solution is BHF showing an extremely high etch selectivity between the silicon dioxide layer 10 and the silicon of the embedding wafers 8,9.

The trench 3 thus produced has sidewalls being ideally planar and planparallel with a micro roughness of better than 1 nm.

After etching the trench native oxide will grow on the silicon sidewalls of the trench thus narrowing it by approximately 1 nm. Since this narrowing is constant along the whole length of the trench and since it is reproducible, it does not disturb the measuring of features with the calibration standard.

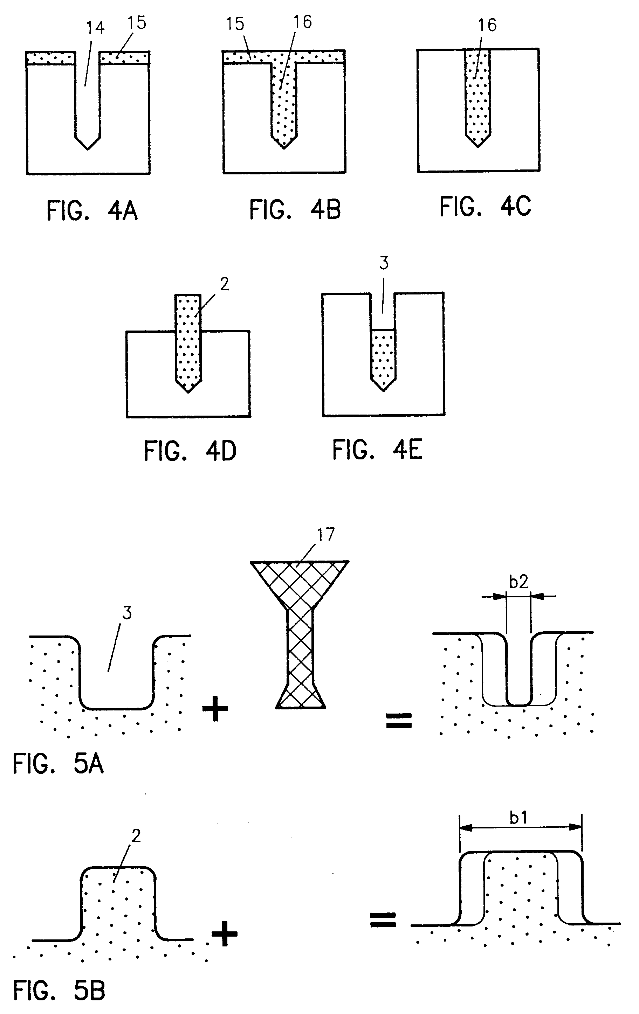

Another possibility of producing the calibration standard is shown with its different process steps in Figs.4a to 4e.

The base material is a one-side polished wafer 7 of single crystal material with a (110) orientation of its surface, preferably silicon. In Fig.4a a layer 15 of silicon dioxide is deposited on the wafer 7 and a pattern is exposed in a photoresist and transferred by dry or wet etching into the silicon dioxide layer 15. The edges of the pattern have to be aligned extremely precise parallel to (111) planes of the wafer 7. The pattern is anisotropically etched into the surface of the wafer by preferably KOH. The pattern comprises pattern for trenches with different widths with the trenches being arranged in several groups and arrays.

The trenches 14 thus created are confined by (111) planes with two of the (111) planes being parallel and vertical with respect to the wafer 7 surface.

After removal of the residual silicon dioxide mask the trenches 14 are filled by material 16 which exhibits extremely high etching selectivities compared to the single crystal material. Materials which can be used are thermal or chemical vapor deposited silicon dioxide and silicon nitride .

The material 15 on top of the wafer 7 is then etched or polished or chemically and mechanically polished back to the original wafer surface as to be seen in Fig. 4c.

The single crystal wafer material is then selectively etched back against the trench filling material 16 to a defined depth as shown in Fig. 4d. Now a masking process is used to protect half of each row of rectangular structures with a masking material. In the other unprotected half the trench filling material 16 is selectively etched back against the single crystal material to a defined depth to create trenches 3 as may be seen in Fig. 4e.

The masking material is selectively removed and the wafer 7 is diced into dies, each die containing now a multitude of calibration structures of different widths as shown in Figs. 2a and 2b.

In Figs.5a and 5b there is shown a preferred method of measuring features in the sub-nanometer range like ultrafine silicon tips 17 with the calibration standard.

To determine the width of an ultrafine tip 17 only two measurements are carried out. First the width of a trench 3 is measured by profiling the trench 3 with the tip 17 along a path shown as dashed line 19 in Fig. 3 providing a value b1.

Second the width of a raised line 2 of the same pair of structures 2,3 is measured by profiling the raised line 2 with the same tip 17 along a path shown as dahed line 18 in Fig.3 providing a value b2.

To calculate the exact diameter or width of the tip 17 the measured values b1 and b2 are substracted from each other and the resulting value is divided into equal halves according to the formula

$$t = \frac{b2 - b1}{2}$$

with t being the diameter of the tip 17.

The lateral dimension d of the raised line 2 and the trench 3 then is given by

$$d = b2 - \frac{b2 - b1}{2}$$

This shows that the knowledge of the exact dimensions of the pair 4 of structures 2,3 of the calibration standard is not necessary to determine the width of a feature like an ultrafine tip 17 to be measured. It is very important that both of the structures 2,3, the raised line and the trench, show exactly the identical width and the two measurements needed are carried out with the different structures of the same pair of structures to asssure the accuracy of the calibration.

The accuracy strongly depends on the differences in the lateral dimensions the parallelity of the sidewalls as well as on the micro roughness of the sidewalls between the two different kinds of structures 2,3.

Therefore it is important to find optimized production processes to assure that the afforded quality of the parameters is met. Suitable production methods are those described above.

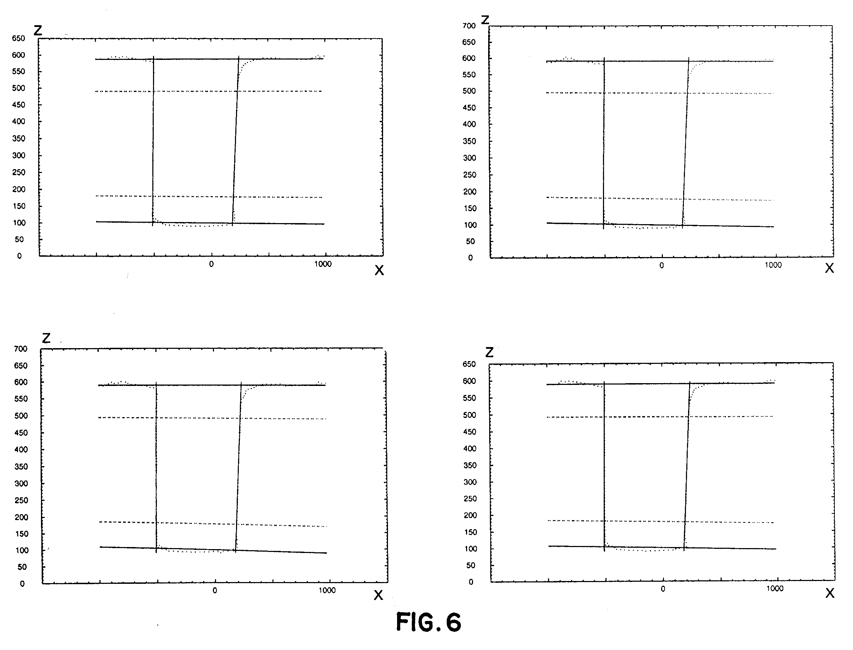

Some results of measurements made with an ultrafine tip and the calibration standard are shown in Fig.6 prooving the accurateness of this measurement technique. Fig.6 shows repeatability measurements in a 716 nm wide trench.

These measurements demonstrate a repeatability of about 1 nm.

## Claims

1. A calibration standard comprising
   a supporting structure (1) of single crystal material with at least one pair (4) of different kinds of structures (2, 3), the structures (2, 3) of each of said pair (4) of different kinds of structures having the identical width.

2. The calibration standard of claim 1 wherein said at least one pair (4) of different kinds of structures(2,3) comprises an array (5) of said pairs.

3. The calibration standard of claim 2 wherein said different kinds of structures (2, 3) of groups (6) of said pairs (4) forming said array have different widths.

4. The calibration standard of any of the preceding
   claims 1 to 3 wherein said different kinds of structures (2, 3) comprise a raised line (2) and a trench (3).

5. The calibration standard of claim 4 wherein said single crystal material of said supporting structure (1) comprises silicon and said trench (3) is filled with and said raised line (2) is made of a material comprising silicon dioxide and silicon nitride.

**6.** The calibration standard of any of the preceding claims 1 to 5 wherein said single crystal material has a (110)-orientation and said width of said different kinds of structures (2, 3) is in the range of about 500 nm.

**7.** A method of producing a calibration standard according to any of the preceding claims 1 to 6 comprising the steps:

providing a first (8) and a second (9) polished wafer of the same single crystal material with the same crystal orientation

forming an oxide layer (10) of a defined thickness on the polished surface (11) of said first wafer (8)

bonding said second polished wafer (9) to said first oxidized wafer (8) with the polished surface (11) of said first wafer (8) facing the polished surface (12) of said second wafer (9) and

forming at least one pair (4) of different kinds of structures (2, 3) of identical width with and within said oxide layer (10).

**8.** The method of claim 7 wherein

said forming of said at least one pair (4) of different kinds of structures (2, 3) further comprises

cutting said bonded structure rectangular to said polished surfaces (11, 12) of said wafers (8, 9),

polishing the surface of cut (13),

selectively etching said first and second wafer (8, 9) to a defined first depth

masking the portions of said oxide layer (10) now representing said first kind of structure (2)

selectively etching said oxide layer (10) in the unmasked areas to a defined second depth.

**9.** The method of claim 7 or 8 wherein

said forming an oxide layer (10) comprises thermally oxidizing said first wafer (8) and

said bonding comprises fusion bonding and anodic bonding.

**10.** The method of claim 8 or 9 wherein

said selectively etching said first (8) and second (9) wafer comprises anisotropically wet etching and

said selectively etching said oxide layer (10) comprises etching with BHF.

**11.** A method of producing a calibration standard according to any of the preceding claims 1 to 6 comprising the steps:

providing a wafer (7) of single crystal material

etching trenches (14) with different widths into the surface of the wafer (7)

filling said trenches (14) with material (16) exhibiting high etching selectivity compared to said single crystal material

forming said first kind of structure (2) by selectively etching back said single crystal material against said trench filling material (16) to a defined first depth

masking portions of said first kind of structure (2)

formimg said second kind of structure (3) by selectively etching said first kind of structure (2) in the unmasked areas to a defined second depth.

**12.** A method for measuring features in the subnanometer range, especially ultrafine silicon tips, using a calibration standard according to any of the preceding claims 1 to 6 comprising

providing an ultrafine silicon tip (17)

measuring the width b1 of said first kind of structure (2) of said at least one pair of different kinds of structures

measuring the width b2 of said second kind of structure (3) of the same pair

wherein said measuring comprises profiling said first and second kind of structure (2, 3) of said at least one pair with said ultrafine tip (17) and

calculating the diameter of said tip (17) by subtracting said measured widths b1 and b2 and dividing the resulting value into equal halves.

FIG. 2B

FIG. 1

FIG. 2A

500nm

500nm

FIG. 3

FIG. 4A

FIG. 4B

FIG. 4C

FIG. 4D

FIG. 4E

FIG. 5A

FIG. 5B

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | APPLIED PHYSICS LETTERS. vol. 61, no. 20 , 16 November 1992 , NEW YORK US pages 2479 - 2481 T.OHMI ; S.AOYAMA 'calibration of height in atomic force microscope images with subnanometer scale silicon dioxide steps' | 1,2,4 | G01N27/00 G01B7/34 |
| A | * the whole document * | 7,11,12 | |
| Y | JOURNAL OF VACUUM SCIENCE AND TECHNOLOGY: PART A. vol. 8, no. 1 , January 1990 , NEW YORK US pages 394 - 399 M.ANDERS ET AL 'potentiometry for thin-film structures using atomic force microscopy' * page 397, left column, paragraph 2 - right column, paragraph 3; figure 3 * | 1,2,4 | |
| D,A | SPIE OPTICAL TESTING AND METROLOGY vol. 661 , 3 June 1986 pages 402 - 407 G.A.CANDELA ET AL 'film thickness and refractive index standard reference material calibrated by ellipsometry and profilometry' | 1,2,4,5 | TECHNICAL FIELDS SEARCHED (Int.Cl.5) G01N G01B |
| E | WO-A-93 14377 (T.OHMI ; H.FUKUMORI) * abstract; figures * | 1,2,4 | |
| A | proc. IEEE 1992 Int.Conference on Microelectronic Test Structures,Vol 5, March 1992.pages 180-184. San Diego USA "Critical Dimension Measurements by Electron and Optical Beams for the Establishment of Linewidth Standards" (T.Hatsuzawa ; K.Toyoda) | 1,2,4,6, 12 | |

-/--

The present search report has been drawn up for all claims

| Place of search | Date of completion of the search | Examiner |
|---|---|---|
| THE HAGUE | 2 December 1993 | Brock, T |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | JOURNAL OF VACUUM SCIENCE AND TECHNOLOGY: PART A. vol. 6, no. 2 , March 1988 , NEW YORK US pages 432 - 435 M.GEHRTZ ET AL 'scanning tunneling microscopy of machined surfaces' | 1,2,4,6, 12 | |
| A | EP-A-0 536 827 (IBM CORP) *column 19,lines 10-47* * the whole document * | 12 | |
| A | PATENT ABSTRACTS OF JAPAN vol. 015, no. 480 (P-1284)5 December 1991 & JP-A-32 006 905 (SEIKO INSTR. INC) 10 September 1991 * abstract * | 1,12 | |

**TECHNICAL FIELDS SEARCHED** (Int.Cl.5)

The present search report has been drawn up for all claims

| Place of search | Date of completion of the search | Examiner |
|---|---|---|
| THE HAGUE | 2 December 1993 | Brock, T |